# EUROPEAN PATENT APPLICATION

(11) **EP 4 841 741 A1**
(43) Date of publication of application: **18.11.2026**
(21) Application number: 26178121.5
(22) Date of filing: 12.05.2026
(51) Int. Cl.: H01M 10/0569, H01M 10/0567

(54) **ELECTROLYTE FOR LITHIUM SECONDARY BATTERY AND LITHIUM SECONDARY BATTERY INCLUDING THE SAME**

(30) Priority: 12.05.2025 KR 20250061220
(71) Applicant: SK On Co., Ltd., Seoul 03161 (KR); SK Innovation Co., Ltd., Seoul 03188 (KR)
(72) Inventor: LEE, Min Hee, 34124 Daejeon (KR); KIM, Myoung Lae, 34124 Daejeon (KR); PARK, Geum Yong, 34124 Daejeon (KR); CHO, In Haeng, 34124 Daejeon (KR)
(74) Representative: Prüfer & Partner mbB Patentanwälte · Rechtsanwälte

(57) **Abstract**

An electrolyte for a lithium secondary battery includes a lithium salt, and a dioxolane-based compound. A lithium secondary battery includes an electrode assembly including at least one cathode and at least one anode, a case for housing the electrode assembly, and the electrolyte housed together with the electrode assembly in the case

## Description

### BACKGROUND

### 1. Field

The present disclosure relates to an electrolyte for a lithium secondary battery and a lithium secondary battery including the same.

### 2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of an eco-friendly vehicle such as an hybrid automobile.

Examples of the secondary battery include a lithium secondary battery, a nickelcadmium battery, a nickel-hydrogen battery, etc. The lithium secondary battery among the secondary batteries is being actively developed due to high operational voltage and energy density per unit weight, a high charging rate, a compact dimension, etc.

For example, the lithium secondary battery may include an electrode assembly including a cathode, an anode and a separation layer (separator), and an electrolyte impregnating the electrode assembly. The lithium secondary battery may further include, e.g., a pouch-shaped exterior material accommodating the electrode assembly and the electrolyte.

As the application range of the lithium secondary battery expands, extended life-span, and higher capacity and operation stability are required. Accordingly, a lithium secondary battery that provides uniform power and capacity even in a harsh environment may be preferable.

However, in a harsh environment of high temperature or low temperature, a side reaction between an electrode surface and the electrolyte may occur to degrade stability of the battery.

### SUMMARY

According to an aspect of the present disclosure, there is provided an electrolyte for a lithium secondary battery having improved electrochemical properties.

According to an aspect of the present invention, there is provided a lithium secondary battery including the electrolyte.

An electrolyte for a lithium secondary battery according to embodiments includes a lithium salt, and a dioxolane-based compound represented by Chemical Formula 1.

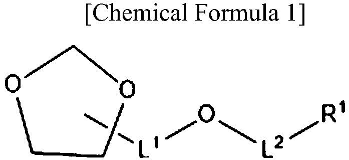

In Chemical Formula 1, L¹ is an alkylene group having 1 to 10 carbon atoms, L² is a direct linkage or a sulfonyl group, and R¹ is an alkyl group having 1 to 10 carbon atoms, an alkenyl group having 2 to 10 carbon atoms, an alkynyl group having 2 to 10 carbon atoms, a cycloalkyl group having 3 to 10 carbon atoms, an aryl group having 6 to 20 carbon atoms, a heteroalkyl group having 1 to 10 carbon atoms, or a heteroaryl group having 6 to 20 carbon atoms.

In some embodiments, the dioxolane-based compound may include a compound represented by Chemical Formula 2.

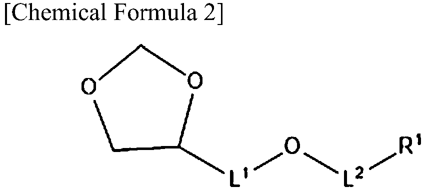

In Chemical Formula 2, L¹ is an alkylene group having 1 to 10 carbon atoms, L² is a direct linkage or a sulfonyl group, and R¹ is an alkyl group having 1 to 10 carbon atoms, an alkenyl group having 2 to 10 carbon atoms, an alkynyl group having 2 to 10 carbon atoms, a cycloalkyl group having 3 to 10 carbon atoms, an aryl group having 6 to 20 carbon atoms, a heteroalkyl group having 1 to 10 carbon atoms, or a heteroaryl group having 6 to 20 carbon atoms.

In some embodiments, in Chemical Formula 1, L¹ may be an alkylene group having 1 to 3 carbon atoms.

In some embodiments, in Chemical Formula 1, R¹ may be an alkyl group having 1 to 5 carbon atoms, an alkynyl group having 2 to 5 carbon atoms, or an aryl group having 6 to 12 carbon atoms.

In some embodiments, the dioxolane-based compound may include a compound represented by Chemical Formulae 2-1 to 2-3.

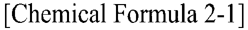

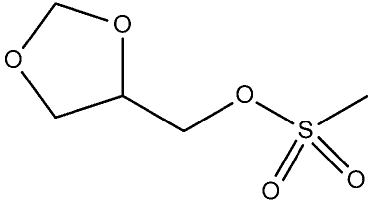

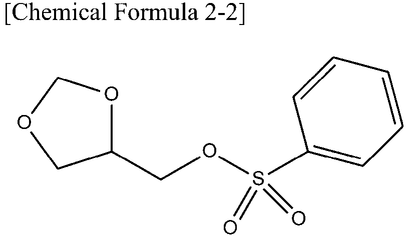

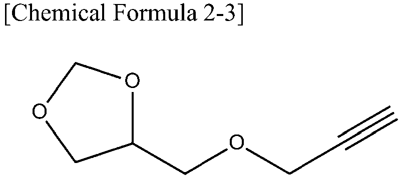

In some embodiments, the compound represented by Chemical Formula 1 may be included in an amount of 0.1 wt% to 5 wt% based on a total weight of the electrolyte.

In some embodiments, the electrolyte may further comprise at least one auxiliary additive selected from the group consisting of a cyclic carbonate-based compound, a fluorine-substituted cyclic carbonate-based compounds, a sultone-based compound, a cyclic sulfate-based compound and a phosphate-based compound.

In some embodiments, the auxiliary additive may be included in an amount greater than 0, and less than or equal to 10 wt% based on a total weight of the electrolyte.

In some embodiments, the electrolyte may further include an organic solvent, and the organic solvent may include a linear carbonate and a cyclic carbonate.

In some embodiments, the linear carbonate may include at least one selected from the group consisting of dimethyl carbonate (DMC), ethyl methyl carbonate (EMC), methyl propyl carbonate, ethyl propyl carbonate, diethyl carbonate (DEC) and dipropyl carbonate.

In some embodiments, the cyclic carbonate may include at least one selected from the group consisting of propylene carbonate (PC), ethylene carbonate (EC) and butylene carbonate.

In some embodiments, a volume ratio of the linear carbonate and the cyclic carbonate may be 1:10 to 10:1.

A lithium secondary battery according to embodiments include an electrode assembly comprising at least one cathode and at least one anode, a case for housing the electrode assembly, and the above-described electrolyte housed together with the electrode assembly in the case.

An electrolyte for a lithium secondary battery according to embodiments of the present disclosure includes a dioxolane-based compound, and the dioxolane-based compound may form a film on an electrode surface to improve mechanical and chemical stability, and life-span properties of the lithium secondary battery including the electrolyte.

The electrolyte for a lithium secondary battery according to the present disclosure may be widely applied in green technology fields such as an electric vehicle, a battery charging station, a solar power generation, a wind power generation, etc., using a battery, etc. The electrolyte for a lithium secondary battery according to the present disclosure may be used for eco-friendly electric vehicles and hybrid vehicles to prevent a climate change by suppressing air pollution and greenhouse gas emissions. etc.

### BRIEF DESCRIPTION OF THE DRAWINGS

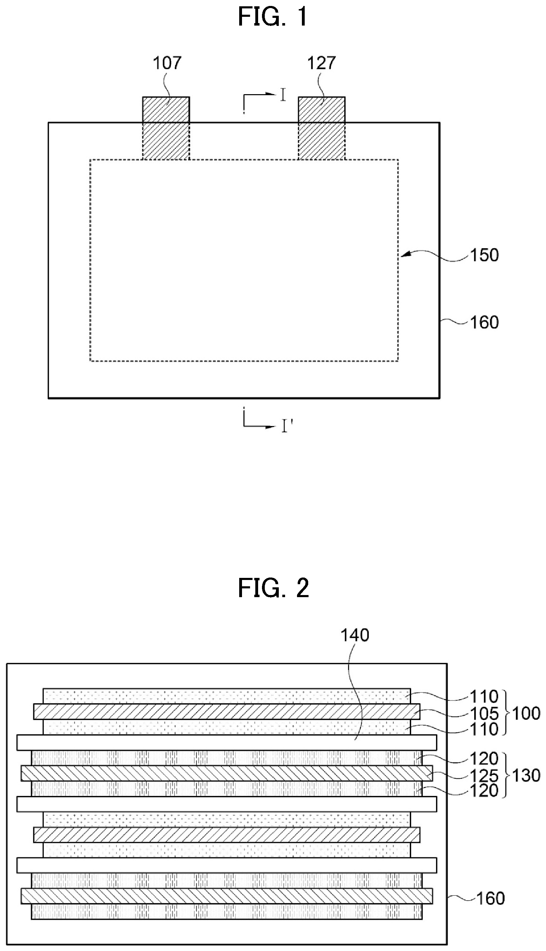

FIGS. 1 and 2 are a schematic plan view and a schematic cross-sectional view, respectively, illustrating a lithium secondary battery in accordance with example embodiments.

### DETAILED DESCRIPTION OF THE EMBODIMENTS

According to the embodiments of the present disclosure, an electrolyte for a lithium secondary battery including a dioxolane-based compound is provided. Additionally, a lithium secondary battery including the electrolyte and having improved mechanical and chemical stability, and life-span properties is provided.

The term "alkylene group (-CₙH₂ₙ-)" used in the present disclosure may refer to a structure in which one hydrogen atom is removed from each carbon atom at both ends of an alkane.

The term "hetero" used in the present disclosure may refer to an inclusion of an additional atom other than carbon and hydrogen. For example, the atom other than carbon and hydrogen may include nitrogen (N), oxygen (O), phosphorus (P), sulfur (S), etc.

The term "direct linkage" used in the present disclosure may refer to a single bond.

In the present disclosure, the electrolyte may refer to a liquid electrolyte, a semi-solid electrolyte, a solid electrolyte, etc., and the semi-solid electrolyte may include, e.g., a gel polymer electrolyte. In the present disclosure, an additive and/or an auxiliary additive may be included in an amount of less than 10 wt%, 9 wt% or less, 8 wt% or less, 7 wt% or less, 6 wt% or less, or 5 wt% or less based on a total weight of the electrolyte.

In the present disclosure, an organic solvent may be included in an amount of 10 wt% or more based on the total weight of the electrolyte.

In example embodiments, a total content of the organic solvent may be 50 wt% or more, 60 wt% or more, 70 wt% or more, 80 wt% or more, or 90 wt% or more based on the total weight of the electrolyte.

### <Electrolyte for Lithium Secondary Battery>

An electrolyte for a lithium secondary battery according to example embodiments of the present disclosure (hereinafter, that may be abbreviated as electrolyte) may include an organic solvent, a lithium salt, and a dioxolane-based compound represented by Chemical Formula 1 below.

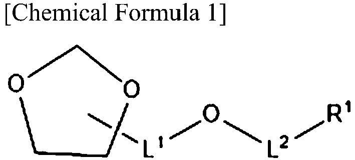

In Chemical Formula 1, L¹ is an alkylene group having 1 to 10 carbon atoms, and L² is a direct linkage or a sulfonyl group. R¹ is an alkyl group having 1 to 10 carbon atoms, an alkenyl group having 2 to 10 carbon atoms, an alkynyl group having 2 to 10 carbon atoms, a cycloalkyl group having 3 to 10 carbon atoms, an aryl group having 6 to 20 carbon atoms, a heteroalkyl group having 1 to 10 carbon atoms, or a heteroaryl group having 6 to 20 carbon atoms.

In example embodiments, R¹ may be a branched or linear hydrocarbon group.

L² may include a sulfonyl (-SO₂-) group, so that a film that may be more stable at high temperature may be formed.

In example embodiments, R¹ may be an alkyl group having 1 to 5 carbon atoms. For example, R¹ may be a methyl group, an ethyl group, a propyl group, a butyl group, or a pentyl group.

In example embodiments, R¹ may be an alkenyl group having 2 to 5 carbon atoms.

In example embodiments, R¹ may be an alkynyl group having 2 to 5 carbon atoms.

In example embodiments, R¹ may be an aryl group having 6 to 12 carbon atoms.

In some embodiments, R¹ may include an equivalent. For example, at least one hydrogen bonded to a carbon in R¹ may be further substituted with an equivalent range of an substituent. For example, at least one hydrogen bonded to a carbon in R¹ may be further substituted with deuterium or an alkyl group having 1 to 3 carbon atoms.

In the above range of the number of carbon atoms, structural stability may be obtained by maintaining an appropriate chain length, and deterioration of an activity of a cathode active material due to an excessive increase in the main chain length may be prevented.

The electrolyte may include the dioxolane-based compound, so that a film may be formed on an electrode surface to protect the electrode surface. Additionally, stable film properties may be provided in high-temperature environment, a thickness change ratio during high-temperature cell storage may be relatively reduced and a capacity retention may be improved.

In example embodiments, the dioxolane-based compound may include a compound represented by the following Chemical Formula 2.

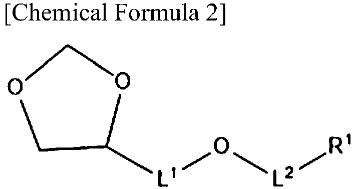

In Chemical Formula 1, L¹ is an alkylene group having 1 to 10 carbon atoms, and L² is a direct linkage or a sulfonyl group. R¹ is an alkyl group having 1 to 10 carbon atoms, an alkenyl group having 2 to 10 carbon atoms, an alkynyl group having 2 to 10 carbon atoms, a cycloalkyl group having 3 to 10 carbon atoms, an aryl group having 6 to 20 carbon atoms, a heteroalkyl group having 1 to 10 carbon atoms, or a heteroaryl group having 6 to 20 carbon atoms.

L² may include a sulfonyl (-SO₂-) group, so that a film that may be more stable at high temperature may be formed.

In example embodiments, R¹ may be an alkyl group having 1 to 5 carbon atoms. For example, R¹ may be a methyl group, an ethyl group, a propyl group, a butyl group, or a pentyl group.

In example embodiments, R¹ may be an alkenyl group having 2 to 5 carbon atoms.

In example embodiments, R¹ may be an alkynyl group having 2 to 5 carbon atoms.

In example embodiments, R¹ may be an aryl group having 6 to 12 carbon atoms.

In some embodiments, R¹ may include an equivalent. For example, at least one hydrogen bonded to a carbon in R¹ may be further substituted with an equivalent range of an substituent. For example, at least one hydrogen bonded to a carbon in R¹ may be further substituted with deuterium or an alkyl group having 1 to 3 carbon atoms.

In the above range of the number of carbon atoms, structural stability may be obtained by maintaining an appropriate chain length, and deterioration of an activity of an cathode active material due to an excessive increase in the main chain length may be prevented.

The electrolyte may include the dioxolane-based compound, so that a film may be formed on an electrode surface to protect the electrode surface. Additionally, stable film properties may be provided in high-temperature environment, a thickness change ratio during high-temperature cell storage may be relatively reduced and a capacity retention may be improved.

In example embodiments, L¹ in Chemical Formula 1 may be an alkylene group having 1 to 3 carbon atoms.

Structural stability of the dioxolane-based compound may be further enhanced in the above range of the number of the carbon atoms.

In example embodiments, R¹ in Chemical Formula 1 may be an alkyl group having 1 to 5 carbon atoms, an alkynyl group having 2 to 5 carbon atoms, or an aryl group having 6 to 12 carbon atoms.

In the above range of the number of carbon atoms, a resistance of the film formed on the electrode surface may be maintained within an appropriate range.

In example embodiments, the dioxolane-based compound may include a compound represented by Chemical Formula 2a or 2b below.

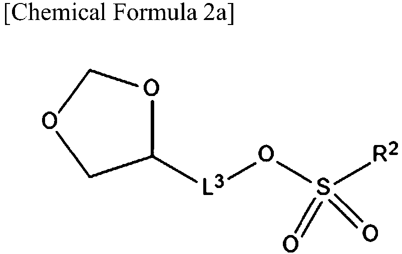

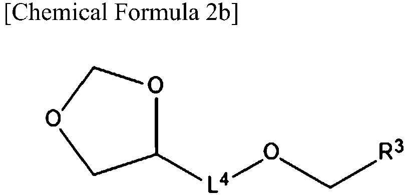

In Chemical Formula 2a and/or 2b, L³ and/or L⁴ may each be an alkylene group having 1 to 10 carbon atoms. R² and/or R³ may each be an alkyl group having 1 to 10 carbon atoms, an alkenyl group having 2 to 10 carbon atoms, an alkynyl group having 2 to 10 carbon atoms, a cycloalkyl group having 3 to 10 carbon atoms, an aryl group having 6 to 20 carbon atoms, a heteroalkyl group having 1 to 10 carbon atoms, or a heteroaryl group having 6 to 20 carbon atoms.

In example embodiments, R² and/or R³ may each be an alkyl group having 1 to 5 carbon atoms. For example, R² and/or R³ may each be a methyl group, an ethyl group, a propyl group, a butyl group, or a pentyl group.

In example embodiments, R² and/or R³ may each be an alkenyl group having 2 to 5 carbon atoms.

In example embodiments, R² and/or R³ may each be an alkynyl group having 2 to 5 carbon atoms.

In example embodiments, R² and/or R³ may each be an aryl group having 6 to 12 carbon atoms.

In some embodiments, R² and/or R³ may each include an equivalent. For example, at least one hydrogen bonded to a carbon in R² and/or R³ may be further substituted with an equivalent range of substituents. For example, at least one hydrogen bonded to carbon in R² and/or R³ may be further substituted with deuterium or an alkyl group having 1 to 3 carbon atoms.

In example embodiments, the dioxolane-based compound may include a compound represented by Chemical Formulae 2-1 to 2-3.

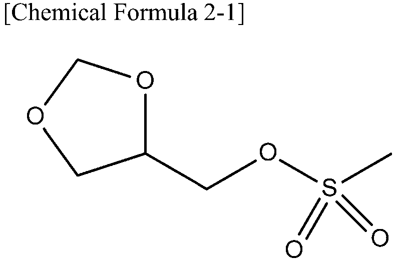

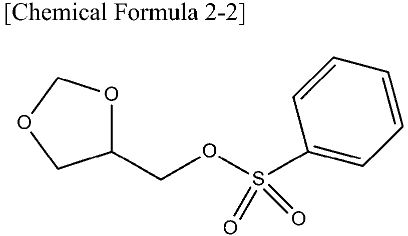

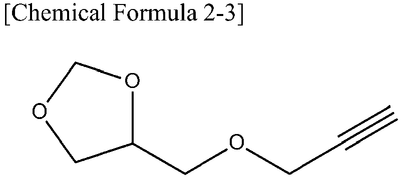

In some embodiments, a content of the compound represented by Chemical Formula 1 based on the total weight of the electrolyte may be less than about 10 wt%, 0.1 wt% or more.

For example, in consideration of stable film formation, the content of the compound represented by Chemical Formula 1 may be controlled to 0.1 wt% or more, 0.2 wt% or more, 0.3 wt% or more, 0.4 wt% or more, 0.5 wt% or more, or 1 wt% or more. Additionally, in consideration of lithium ion migration in the electrolyte, the content of the compound represented by Chemical Formula 1 may be controlled to 9 wt% or less, 7 wt% or less, 6 wt% or less, 5 wt% or less, 4.5 wt% or less, 4 wt% or less, 3.5 wt% or less, 3 wt% or less, less than 3 wt%, 2.5 wt% or less, or 2 wt% or less.

In example embodiments, the content of the compound represented by Chemical Formula 1 based on the total weight of the electrolyte may be in a range from 0.1 wt% to 5 wt%, from 0.1 wt% to 4 wt%, from 0.1 wt% to 3 wt%, from 0.1 wt% to 2.9 wt%, from 0.1 wt% to 2.8 wt%, from 0.1 wt% to 2.7 wt%, from 0.1 wt% to 2.6 wt%, or from 0.1 wt% to 2.5 wt%. In the above range, the effect of suppressing the side reactions on the electrode surface may be sufficiently implemented without excessively inhibiting transfer of lithium ions.

In example embodiments, the content of the compound represented by Chemical Formula 1 based on the total weight of the electrolyte may be 0.1 wt% or more and less than 5 wt%, 0.1 wt% or more and less than 4 wt%, 0.1 wt% or more and less than 3 wt%, 0.1 wt% or more and less than 2.9 wt%, 0.1 wt% or more and less than 2.8 wt%, 0.1 wt% or more and less than 2.7 wt%, 0.1 wt% or more and less than 2.6 wt%, or 0.1 wt% or more and less than 2.5 wt%. In the above range, the effect of suppressing the side reactions on the electrode surface may be sufficiently implemented without excessively hindering transfer of lithium ions.

In example embodiments, the electrolyte may further include an auxiliary additive. For example, the auxiliary additive may include a cyclic carbonate-based compound, a fluorine-substituted cyclic carbonate-based compound, a sultone-based compound, a cyclic sulfate-based compound, a phosphate-based compound, etc.

The cyclic carbonate-based compound may include a double bond, may include vinylene carbonate (VC), vinyl ethylene carbonate (VEC), etc.

The fluorine-substituted cyclic carbonate-based compound mentioned above may include fluoroethylene carbonate (FEC), etc.

The sultone-based compound may include 1,3-propane sultone, 1,3-propene sultone, 1,4-butane sultone, etc.

The cyclic sulfate-based compound mentioned above may include 1,2-ethylene sulfate, 1,2-propylene sulfate, etc.

The phosphate-based compounds may include lithium monofluorophosphate (Li₂PO₃F), lithium difluorophosphate (LiPO₂F₂), lithium difluorobis(oxalato)phosphate (LiDFBP), etc.

In an embodiment, the fluorine-substituted cyclic carbonate-based compound and the cyclic carbonate-based compound may be used together as the auxiliary additive. In this case, stability and durability of the protective film may be further enhanced.

In an embodiment, the sultone-based compound may be used together with the fluorine-substituted cyclic carbonate-based compound and the cyclic carbonate-based compound.

The above-described auxiliary additive may further enhance durability and stability of the protective film formed by the dioxolane-based compound. The auxiliary additive may be included in an appropriate amount within a range that does not hinder the transfer of lithium ions in the electrolyte.

For example, in consideration of the action of the dioxolane-based compound, a content of the auxiliary additive may be adjusted to 10 wt% or less, 9 wt% or less, 8 wt% or less, 7 wt% or less, 6 wt% or less, 5 wt% or less, 4 wt% or less, 3 wt% or less, 2.5 wt% or less, 2 wt% or less, or 1 wt% or less based on the total weight of the electrolyte. The content of the auxiliary additive may be adjusted to greater than 0, 0.01 wt% or more, 0.02 wt% or more, 0.03 wt% or more, 0.05 wt% or more, 0.1 wt% or more, 0.2 wt% or more, 0.3 wt% or more, 0.4 wt% or more, or 0.5 wt% or more in consideration of stabilization of the protective film.

In some embodiments, the auxiliary additive may be included in an amount of greater than 0 and 10 wt% or less, from 0.01 wt% to 7 wt%, from 0.05 wt% to 5 wt%, or from 0.1 wt% to 4 wt% based on the total weight of the electrolyte. In the above range, durability of the protective film may be enhanced without hindering the film formation of the dioxolane-based compound.

The organic solvent may include an organic compound that may provide sufficient solubility for the lithium salt and the dioxolane-based compound, and may not have reactivity with the lithium secondary battery. In some embodiments, a non-aqueous organic solvent may be used, and the electrolyte may be provided as a non-aqueous electrolyte.

In example embodiments, the organic solvent may include a carbonate-based solvent, an ester-based solvent, an ether-based solvent, a ketone-based solvent, an alcohol-based solvent, a non-protic solvent, etc. These may be used alone or in a combination of two or more therefrom.

The carbonate-based solvent may include a linear carbonate, a cyclic carbonate, etc.

Examples of the linear carbonate include dimethyl carbonate (DMC), ethyl methyl carbonate (EMC), methyl propyl carbonate, ethyl propyl carbonate, diethyl carbonate (DEC), dipropyl carbonate, etc.

Examples of the cyclic carbonate include propylene carbonate (PC), ethylene carbonate (EC), butylene carbonate, etc.

Examples of the ester-based solvent include methyl acetate (MA), ethyl acetate (EA), n-propyl acetate (n-PA), 1,1-dimethylethyl acetate (DMEA), methyl propionate (MP), ethyl propionate (EP), gamma-butyrolactone (GBL), decanolide, valerolactone, mevalonolactone, caprolactone, etc.

Examples of the ether-based solvent include dibutyl ether, tetraethylene glycol dimethyl ether (TEGDME), diethylene glycol dimethyl ether (DEGDME), dimethoxyethane, 2-methyltetrahydrofuran, tetrahydrofuran, etc.

Examples of the ketone-based solvent include cyclohexanone. Examples of the alcohol-based solvent include ethyl alcohol, isopropyl alcohol, etc.

The non-protic solvent may include a nitrile-based solvent, an amide-based solvent such as dimethyl formamide (DMF), a dioxolane-based solvent such as 1,3-dioxolane, a sulfolane-based solvent, etc.

In an embodiment, the carbonate-based solvent may be used as the organic solvent. For example, the organic solvent may include ethylene carbonate (EC), ethyl methyl carbonate (EMC), dimethyl carbonate (DMC), diethyl carbonate (DEC), or a combination thereof. In an embodiment, a combination of at least two of ethylene carbonate (EC), ethyl methyl carbonate (EMC), dimethyl carbonate (DMC) and diethyl carbonate (DEC) may be used as the organic solvent.

In example embodiments, the organic solvent may include the linear carbonate and the cyclic carbonate, and a volume ratio of the linear carbonate and the cyclic carbonate may be 1:10 to 10:1.

The electrolyte may include a lithium salt. The lithium salt may be expressed, e.g., as Li⁺X⁻, and non-limiting examples of the anion X⁻ of the lithium salt include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻. These may be used alone or in a combination of two or more therefrom

In an embodiment, the lithium salt may include LiN(SO₂F)₂, LiN(SO₂CF₃)₂, and LiPF₆.

In an embodiment, the lithium salt may be included in the organic solvent at a concentration from 0.01 to 5 M, from 0.01 to 2 M, or from 0.1 to 1.5 M. In the above range, the transfer of lithium ions and/or electrons during charging and discharging of the lithium secondary battery may be promoted, thereby achieving improved capacity.

The organic solvent in the electrolyte may be used as a remainder or a balance amount excluding the components described above.

### <Lithium Secondary Battery>

Embodiments of the present disclosure provide a lithium secondary battery including the above-described electrolyte.

FIGS. 1 and 2 are a schematic plan view and a cross-sectional view, respectively, illustrating a lithium secondary battery according to example embodiments. For example, FIG. 2 is a cross-sectional view taken along a line I-I' of FIG. 1.

Referring to FIG. 1 and FIG. 2, a lithium secondary battery may include an electrode assembly including a cathode 100, an anode 130, and a separator 140 interposed between the cathode and the anode.

The electrode assembly may be housed in a case 160 together with the electrolyte and impregnated by the electrolyte.

The cathode 100 may include a cathode active material layer 110 formed by coating a cathode active material to a cathode current collector 105. The cathode active material may include a compound capable of reversibly intercalating and de-intercalating lithium ions.

In example embodiments, the cathode active material may include a lithium-transition metal oxide. For example, the lithium-transition metal oxide may include nickel (Ni), and may further include at least one of cobalt (Co) or manganese (Mn).

For example, the lithium-transition metal oxide may be represented by Chemical Formula 3.

[Chemical Formula 3] Li₁₊ₐNi_{1-(x+y)}CoₓM_{y}O₂

In Chemical Formula 3, -0.05≤a≤0.2, 0.01≤x≤0.3, 0.01≤y≤0.3, and M may include one or more elements selected from Mn, Mg, Sr, Ba, B, Al, Si, Ti, Zr or W.

As represented in the above Chemical Formula 3, the lithium-transition metal oxide may contain Ni in the largest content or molar ratio among Ni, Co and M. Ni may function as a metal substantially related to a power and/or a capacity of the lithium secondary battery, and Ni may be included in the largest amount among transition metals, so that high-capacity, high-power lithium secondary battery may be implemented.

In an embodiment, in Chemical Formula 3, 0.01≤x≤0.2 and 0.01≤y≤0.2. In an embodiment, the molar ratio of Ni may be 0.7 or higher, or 0.8 or higher.

When the content of Ni in the cathode active material or the lithium-transition metal oxide increases, chemical stability, e.g., high-temperature storage stability of the secondary battery may be relatively deteriorated. Further, due to surface damages to the cathode active material or side reactions with the electrolyte caused by repeated charge/discharge cycles, sufficient high-power/high-capacity properties from the high Ni content may not be implemented.

However, as described above, the dioxolane-based compound may provide passivation of the cathode active material by bonding to Ni at a surface of the cathode active material or the lithium-transition metal oxide through coordination bonding or chemical interaction. Thus, high power/high capacity properties through high Ni content may be maintained substantially uniformly for a long period even in a high-temperature environment.

A slurry may be prepared by mixing and stirring the cathode active material with a binder, a conductive material and/or a dispersant, etc., in a solvent. The slurry may be coated on the cathode current collector 105, and then dried and pressed to obtain the cathode 100.

The cathode current collector 105 may include, e.g., stainless steel, nickel, aluminum, titanium, copper, or an alloy thereof, and preferably may include aluminum or an aluminum alloy.

The binder may include, e.g., an organic binder such as vinylidene fluoride-hexafluoropropylene copolymer (PVDF-co-HFP), polyvinylidenefluoride (PVDF), polyacrylonitrile, and polymethylmethacrylate, or an aqueous binder such as styrene-butadiene rubber (SBR), and may be used together with a thickener such as carboxymethyl cellulose (CMC).

For example, a PVDF-based binder may be used as the cathode binder. In this case, an amount of the binder for forming the cathode active material layer may be reduced, and an amount of the cathode active material may be relatively increased, thereby improving the power and capacity of the secondary battery.

The conductive material may be included to promote an electron transfer between active material particles. For example, the conductive material may include a carbon-based conductive material such as graphite, carbon black, graphene, carbon nanotube, etc., and/or a metal-based conductive material such as tin, tin oxide, titanium oxide, a perovskite materials including LaSrCoO₃, LaSrMnO₃, etc.

The anode 130 may include an anode current collector 125 and an anode active material layer 120 formed by coating an anode active material on the anode current collector 125.

The anode active material may include a material known in the art capable of absorbing and releasing lithium ions without any specific limitation. For example, a carbon-based material such as a crystalline carbon, an amorphous carbon, a carbon composite, a carbon fiber, etc.; a lithium alloy; a silicon (Si)-based compound or tin, etc., may be used. Examples of the amorphous carbon include hard carbon, coke, a mesocarbon microbead (MCMB), a mesophase pitch-based carbon fiber (MPCF), etc.

Examples of the crystalline carbon include graphite-based carbons such as natural graphite, artificial graphite, a graphitized coke, a graphitized MCMB, a graphitized MPCF, etc. Elements included in the lithium alloy include aluminum, zinc, bismuth, cadmium, antimony, silicon, lead, tin, gallium, indium, etc.

The silicon-based compound may include, e.g., silicon, silicon oxide, or silicon carbide (SiC), a silicon-carbon composite compound.

For example, the above-mentioned anode active material and the above-mentioned binder, conductive material, thickener, etc., may be mixed and stirred together in a solvent to produce a slurry. The slurry may be coated on at least one surface of the anode current collector 125, and then dried and pressed to prepare the anode 130.

A separator 140 may be interposed between the cathode 100 and the anode 130. The separator 140 may include a porous polymer film formed of a polyolefin-based polymer such as an ethylene homopolymer, a propylene homopolymer, an ethylene/butene copolymer, an ethylene/hexene copolymer, an ethylene/methacrylate copolymer, etc. The separator 140 may include a nonwoven fabric formed of a high-melting-point glass fiber, a polyethylene terephthalate fiber, etc.

In some embodiments, an area (e.g., a contact area with the separator 140) and/or a volume of the anode 130 may be larger than that of the cathode 100. Accordingly, lithium ions generated from the cathode 100 may be easily transferred to the anode 130 without, e.g., being precipitated.

In example embodiments, an electrode cell may be defined by the cathode 100, the anode 130 and the separator 140, and a plurality of the electrode cells may be stacked to form an electrode assembly 150 in the form of, e.g., a jelly roll. For example, the electrode assembly 150 may be formed by winding, stacking, folding, etc., of the separator 140.

The electrode assembly 150 may be housed in a case 160 together with the electrolyte according to the above-described embodiments to obtain a lithium secondary battery.

As illustrated in FIG. 1, electrode tabs (cathode tabs and anode tabs) may protrude from the cathode current collector 105 and the anode current collector 125 included in each electrode cell, and may extend to one side of the case 160. The electrode tabs may be fused together with one side of the case 160 to form electrode leads (a cathode lead 107 and an anode lead 127) that may extend or may be exposed to an outside of the case 160.

The lithium secondary battery may be fabricated into a cylindrical shape using a can, a prismatic shape, a pouch shape, a coin shape, etc.

The invention relates also to the following numbered aspects:
Aspect 1. An electrolyte for a lithium secondary battery, comprising:
   a lithium salt; and
   a dioxolane-based compound represented by Chemical Formula 1: 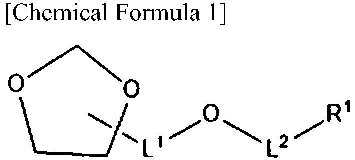
   wherein, in Chemical Formula 1, L¹ is an alkylene group having 1 to 10 carbon atoms, L² is a direct linkage or a sulfonyl group, and R¹ is an alkyl group having 1 to 10 carbon atoms, an alkenyl group having 2 to 10 carbon atoms, an alkynyl group having 2 to 10 carbon atoms, a cycloalkyl group having 3 to 10 carbon atoms, an aryl group having 6 to 20 carbon atoms, a heteroalkyl group having 1 to 10 carbon atoms, or a heteroaryl group having 6 to 20 carbon atoms.
Aspect 2. The electrolyte for a lithium secondary battery of aspect 1, wherein the dioxolane-based compound comprises a compound represented by Chemical Formula 2: 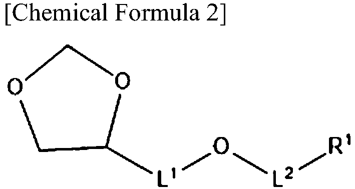 wherein, in Chemical Formula 2, L¹ is an alkylene group having 1 to 10 carbon atoms, L² is a direct linkage or a sulfonyl group, and R¹ is an alkyl group having 1 to 10 carbon atoms, an alkenyl group having 2 to 10 carbon atoms, an alkynyl group having 2 to 10 carbon atoms, a cycloalkyl group having 3 to 10 carbon atoms, an aryl group having 6 to 20 carbon atoms, a heteroalkyl group having 1 to 10 carbon atoms, or a heteroaryl group having 6 to 20 carbon atoms.
Aspect 3. The electrolyte for a lithium secondary battery of aspect 1 or 2, wherein, in Chemical Formula 1, L¹ is an alkylene group having 1 to 3 carbon atoms.
Aspect 4. The electrolyte for a lithium secondary battery of any one of aspects 1 to 3, wherein, in Chemical Formula 1, R¹ is an alkyl group having 1 to 5 carbon atoms, an alkynyl group having 2 to 5 carbon atoms, or an aryl group having 6 to 12 carbon atoms.
Aspect 5. The electrolyte for a lithium secondary battery of any one of aspects 1 to 4, wherein the dioxolane-based compound comprises a compound represented by Chemical Formulae 2-1 to 2-3: 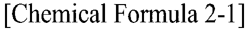 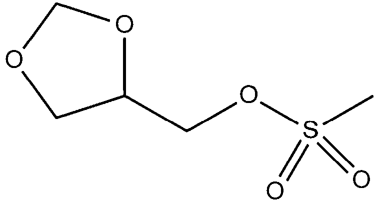 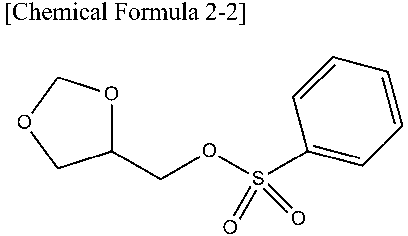 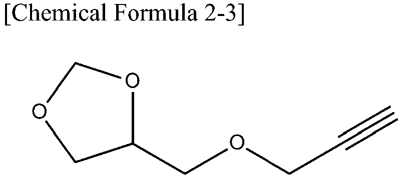
Aspect 6. The electrolyte for a lithium secondary battery of any one of aspects 1 to 5, wherein the compound represented by Chemical Formula 1 is included in an amount of 0.1 wt% to 5 wt% based on a total weight of the electrolyte.
Aspect 7. The electrolyte for a lithium secondary battery of any one of aspects 1 to 6, further comprising at least one auxiliary additive selected from the group consisting of a cyclic carbonate-based compound, a fluorine-substituted cyclic carbonate-based compounds, a sultone-based compound, a cyclic sulfate-based compound and a phosphate-based compound.
Aspect 8. The electrolyte for a lithium secondary battery of aspect 7, wherein the auxiliary additive is included in an amount greater than 0, and less than or equal to 10 wt% based on a total weight of the electrolyte.
Aspect 9. The electrolyte for a lithium secondary battery of any one of aspects 1 to 8, further comprising an organic solvent,
   wherein the organic solvent comprises a linear carbonate and a cyclic carbonate.
Aspect 10. The electrolyte for a lithium secondary battery of aspect 9, wherein the linear carbonate comprises at least one selected from the group consisting of dimethyl carbonate (DMC), ethyl methyl carbonate (EMC), methyl propyl carbonate, ethyl propyl carbonate, diethyl carbonate (DEC) and dipropyl carbonate.
Aspect 11. The electrolyte for a lithium secondary battery of aspect 9 or 10, wherein the cyclic carbonate comprises at least one selected from the group consisting of propylene carbonate (PC), ethylene carbonate (EC) and butylene carbonate.
Aspect 12. The electrolyte for a lithium secondary battery of any one of aspects 9 to 11, wherein a volume ratio of the linear carbonate and the cyclic carbonate is 1:10 to 10:1.
Aspect 13. A lithium secondary battery, comprising:
   an electrode assembly comprising at least one cathode and at least one anode;
   a case for housing the electrode assembly; and
   the electrolyte for a lithium secondary battery of any one of aspects 1 to 12 housed together with the electrode assembly in the case.

### Synthesis of Dioxolane-based Compound

### (1) Synthesis Example 1 (Synthesis of Chemical Formula 2-1)

Glycerol formal (2.14 g, 20.6 mmol), triethylamine (5.7 mL, 41.1 mmol), and 100 mL of dichloromethane were added sequentially to a round-bottom flask and stirred, then cooled to 0 °C. After cooling, a solution of methanesulfonyl chloride (1.9 mL, 24.7 mmol) diluted in 10 mL of dichloromethane was slowly added, and the mixture was stirred for 2 hours while maintaining 0 °C. After stirring, the mixture was washed with distilled water and a saturated aqueous solution of sodium chloride, and dichloromethane was removed from an organic layer under reduced pressure. After removing dichloromethane, 1.5 g of a compound A represented by Chemical Formula 2-1 was obtained as a colorless liquid sample by a silica gel column chromatography (yield: 40%).

The result of ¹H-nuclear magnetic resonance (1H-NMR) spectroscopy performed on the compound A was as follows.

¹H-NMR (500 MHz, CDCl₃): 5.09 (1H, s), 4.92 (1H, s), 4.38 (1H, m), 4.28 (2H, d), 4.07 (1H, m), 3.82 (1H, m), 3.10 (3H, s)

### (2) Synthesis Example 2 (Synthesis of Chemical Formula 2-2)

Glycerol formal (2.04 g, 19.6 mmol), triethylamine (5.5 mL, 39.2 mmol), and 100 mL of dichloromethane were added sequentially to a round-bottom flask, stirred, and then cooled to 0 °C. After cooling, a solution of benzenesulfonyl chloride (3.0 mL, 23.5 mmol) diluted in 10 mL of dichloromethane was slowly added, and the mixture was stirred for 2 hours while maintaining a temperature of 0 °C. After stirring, the mixture was washed with distilled water and a saturated aqueous solution of sodium chloride, and dichloromethane was removed from an organic layer under reduced pressure. After removing dichloromethane, 2.3 g of a compound B represented by Chemical Formula 2-2 was obtained as a yellow liquid sample by a silica gel column chromatography (yield: 48%).

The result of ¹H-nuclear magnetic resonance spectroscopy analysis performed on the compound B was as follows.

¹H-NMR (500 MHz, CDCl₃): 7.97 (2H, m), 7.71 (1H, m), 7.60 (2H, m), 4.95 (1H, s), 4.82 (1H, s), 4.28 (1H, m), 4.10 (2H, m), 3.95 (1H, m), 3.77 (1H, m)

### (3) Synthesis Example 3 (Synthesis of Chemical Formula 2-3)

Glycerol formal (2.08 g, 20.0 mmol), 50% aqueous sodium hydroxide solution (16.0 g, 200.0 mmol), benzyltriethylammonium chloride (50 mg, 0.2 mmol), and 30 mL of toluene were added sequentially to a round-bottom flask, stirred, and then heated to 70 °C. After the heating, propargyl bromide (80% toluene solution, 12.0 mL, 80.0 mmol) was slowly added, and the mixture was stirred for 12 hours while maintaining the temperature at 70 °C. After stirring, the mixture was washed with distilled water and a saturated aqueous solution of sodium chloride, and an organic layer was depressurized to remove toluene. After removing toluene, 1.28 g of a compound C represented by Chemical Formula 2-3 was obtained as a yellow liquid sample by a silica gel column chromatography (yield: 45%).

The result of ¹H-nuclear magnetic resonance spectroscopy analysis performed on the compound C was as follows.

¹H-NMR (500 MHz, CDCl₃): 5.05 (1H, s), 4.91 (1H, s), 4.25 (1H, m), 4.11 (2H, m), 4.10 (1H, m), 3.75 (1H, m), 3.63 (2H, m), 2.47 (1H, s)

### Examples and Comparative Examples

### Example 1

### (1) Preparation of Electrolyte

A 1.0 M LiPF₆ solution (in an EC/EMC mixed solvent with a volume ratio of 25:75) was prepared. Based on the total weight of the electrolyte, 1 wt% of LiPO₂F₂, 5 wt% of fluoroethylene carbonate (FEC), and 0.8 wt% of 1,3-propane sulfone (PS) were added to the LiPF₆ solution, and 0.1 wt% of the compound A as a dioxolane-based compound was mixed.

### (2) Fabrication of lithium secondary battery sample

A slurry was prepared by mixing Li[Ni_{0.8}Co_{0.1}Mn_{0.1}]O₂ as a cathode active material, carbon black as a conductive material, and polyvinylidene fluoride (PVDF) as a binder in a weight ratio of 92:5:3. The slurry was uniformly coated on an aluminum foil having a thickness of 15 µm, vacuum dried at 130 °C, and pressed to obtain a cathode for a lithium secondary battery.

An anode slurry including 95 wt% a silicon-graphite composite (SiC) with a silicon content of 15 wt% as an anode active material, 1 wt% Super-P as a conductive material, 2 wt% styrene-butadiene rubber (SBR) as a binder, and 2 wt% carboxymethyl cellulose (CMC) as a thickener was prepared. The anode slurry was uniformly coated on a copper foil having a thickness of 15 µm, dried, and pressed to obtain an anode.

The above-prepared cathode and anode were each cut to a predetermined size and stacked with a separator (polyethylene, thickness: 20 µm) interposed therebetween to form an electrode assembly, and then tab portions of the cathode and anodes were welded.

The electrode assembly was placed in a pouch, and three sides except for an electrolyte injection side were sealed. A portion around the electrode tabs was included in the sealed portion. The electrolyte prepare in (1) was injected through the electrolyte injection side, and then the electrolyte injection side was also sealed. Thereafter, impregnation was performed for at least 12 hours to obtain a lithium secondary battery sample.

### Examples 2 to 4

Lithium secondary battery samples were prepared by the same method as that in Example 1, except that the compound A was used in amounts of 0.5 wt%, 1.0 wt% and 3.0 wt%, respectively.

### Examples 5 to 7

Lithium secondary battery samples were prepared by the same method as that in Example 1, except that the compound B was used as the dioxolane-based compound in amounts of 0.1 wt%, 0.5 wt% and 3.0 wt%, respectively.

### Examples 8 to 10

Lithium secondary battery samples were prepared by the same method as that in Example 1, except that the compound C was used as the dioxolane-based compound in amounts of 0.1 wt%, 0.5 wt% and 3.0 wt%, respectively.

### Comparative Example 1

A secondary battery sample was prepared by the same method as that in Example 1, except that the dioxolane compound was omitted during the preparation of the electrolyte.

### Experimental Example

### (1) Evaluation on room temperature properties

### 1) Evaluation on initial capacity

For each of the secondary batteries of Examples and Comparative Examples, a discharge capacity (mAh) was measured after performing 0.5 C-rate CC/CV charging (4.2 V, 0.05 C cut-off) at 25 °C, followed by 0.5 C-rate CC discharging (2.7 V cut-off).

### 2) Evaluation on internal resistance (D_DCIR)

At a point of an SOC 60%, a C-rate was increased to 0.2 C, 0.5 C, 1.0 C, 1.5 C, 2.0 C, and 2.5 C. Charging and discharging at the corresponding C-rate were performed for 10 seconds, a linear equation was calculated using terminal points of voltages. A slope of the linear equation was adopted as D_DCIR (mΩ).

### (2) Evaluation on high-temperature storage properties

### 1) Evaluation of thickness increase ratio after high-temperature storage

The secondary batteries of Examples and Comparative Examples charged as described in Experimental Example (1)-1) were stored in a 60°C constant temperature and humidity chamber for 6 weeks. Thicknesses of each secondary battery before and after the storage in the chamber were measured using a flat plate thickness measuring device (Mitutoyo, 543-490B), and a thickness increase rate (%) was calculated. 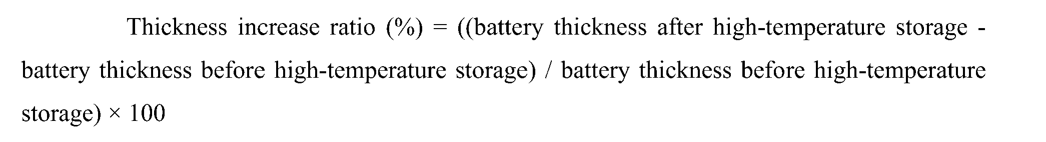Thickness increase ratio (%) = ((battery thickness after high-temperature storage - battery thickness before high-temperature storage) / battery thickness before high-temperature storage) × 100

### 2) Evaluation on capacity retention after high-temperature storage

The secondary batteries of Examples and Comparative Examples stored at high temperatures as described above were subjected to 0.5 C-rate CC discharge (2.7 V cut-off), and a discharge capacity was measured.

A capacity retention (%) was calculated as a percentage of the discharge capacity after high-temperature storage relative to the initial capacity measured in Experimental Example (1)-1). 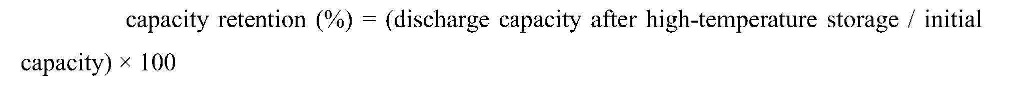
capacity retention (%) = (discharge capacity after high-temperature storage / initial capacity) × 100

### (3) Evaluation on cycle life-span property

### 1) Evaluation on capacity retention

The secondary batteries of Examples and Comparative Examples, charged as described in Experimental Example (1)-1) were subjected to 500 cycles at 45°C with an applied current of 1.0 C during charging and discharging, with a 10-minute rest period between the cycles.

A capacity retention (%) was calculated as a percentage of a discharge capacity after 500 cycles at 45°C relative to the initial capacity measured in Experimental Example (1)-1). 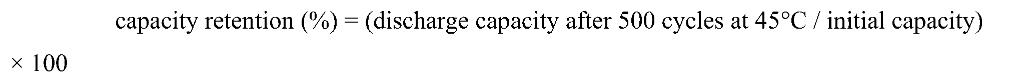
capacity retention (%) = (discharge capacity after 500 cycles at 45°C / initial capacity) × 100

The results of the above evaluation are shown in Table 1 below.

**[Table 1]**

| secondary battery | room temperature | | 60 °C, storage for 6 weeks | | 45 °C, 500 cycles |
|---|---|---|---|---|---|
| | capacity (mAh) | D_DCIR (mΩ) | thickness increase ratio (%) | capacity retention (%) | capacity retention (%) |
| Example 1 | 1981 | 38.1 | 195.7 | 74.0 | 85.4 |
| Example 2 | 1977 | 36.7 | 191.5 | 74.3 | 85.2 |
| Example 3 | 1974 | 35.7 | 169.9 | 72.1 | 84.2 |
| Example 4 | 1971 | 40.1 | 161.9 | 73.4 | 82.2 |
| Example 5 | 1984 | 34.6 | 211.1 | 70.9 | 85.4 |
| Example 6 | 1978 | 34.9 | 206.9 | 75.1 | 85.3 |
| Example 7 | 1953 | 39.6 | 208.6 | 72.8 | 81.9 |
| Example 8 | 1984 | 34.7 | 191.1 | 73.2 | 85.4 |
| Example 9 | 1980 | 37.2 | 190.9 | 74.7 | 85.6 |
| Example 10 | 1956 | 44.2 | 161.6 | 69.0 | 80.4 |
| Comparative Example 1 | 1973 | 38.1 | 217.9 | 69.8 | 85.2 |

Referring to Table 1, the secondary batteries of Examples where the electrolyte including the above-described dioxolane-based compound generally provided higher initial capacity and lower internal resistance than those from the secondary batteries of Comparative Example 1 which did not contain the dioxolane-based compound. Additionally, the secondary batteries of Examples provided improved high-temperature storage properties while having high-temperature cycle properties similar to those of Comparative Example 1. Further, gas generation was reduced even after the high-temperature storage, thereby suppressing the increase in the battery thickness.

## Claims

1. An electrolyte for a lithium secondary battery, comprising:
a lithium salt; and
a dioxolane-based compound represented by Chemical Formula 1: 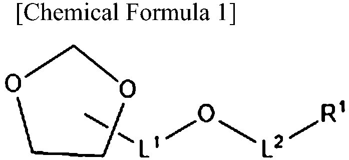
wherein, in Chemical Formula 1, L¹ is an alkylene group having 1 to 10 carbon atoms, L² is a direct linkage or a sulfonyl group, and R¹ is an alkyl group having 1 to 10 carbon atoms, an alkenyl group having 2 to 10 carbon atoms, an alkynyl group having 2 to 10 carbon atoms, a cycloalkyl group having 3 to 10 carbon atoms, an aryl group having 6 to 20 carbon atoms, a heteroalkyl group having 1 to 10 carbon atoms, or a heteroaryl group having 6 to 20 carbon atoms.

2. The electrolyte for a lithium secondary battery of claim 1, wherein the dioxolane-based compound comprises a compound represented by Chemical Formula 2: 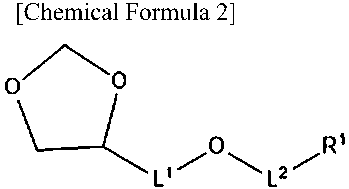 wherein, in Chemical Formula 2, L¹ is an alkylene group having 1 to 10 carbon atoms, L² is a direct linkage or a sulfonyl group, and R¹ is an alkyl group having 1 to 10 carbon atoms, an alkenyl group having 2 to 10 carbon atoms, an alkynyl group having 2 to 10 carbon atoms, a cycloalkyl group having 3 to 10 carbon atoms, an aryl group having 6 to 20 carbon atoms, a heteroalkyl group having 1 to 10 carbon atoms, or a heteroaryl group having 6 to 20 carbon atoms.

3. The electrolyte for a lithium secondary battery of claim 1 or 2, wherein, in Chemical Formula 1, L¹ is an alkylene group having 1 to 3 carbon atoms.

4. The electrolyte for a lithium secondary battery of any one of claims 1 to 3, wherein, in Chemical Formula 1, R¹ is an alkyl group having 1 to 5 carbon atoms, an alkynyl group having 2 to 5 carbon atoms, or an aryl group having 6 to 12 carbon atoms.

5. The electrolyte for a lithium secondary battery of any one of claims 1 to 4, wherein the dioxolane-based compound comprises a compound represented by Chemical Formulae 2-1 to 2-3:

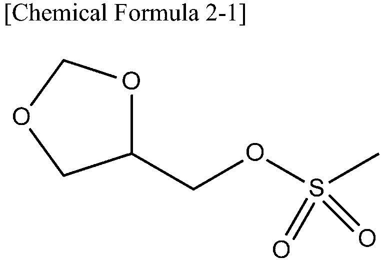

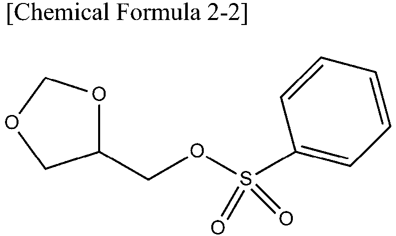

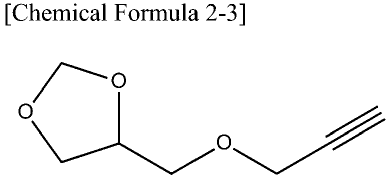

6. The electrolyte for a lithium secondary battery of any one of claims 1 to 5, wherein the compound represented by Chemical Formula 1 is included in an amount of 0.1 wt% to 5 wt% based on a total weight of the electrolyte.

7. The electrolyte for a lithium secondary battery of any one of claims 1 to 6, further comprising at least one auxiliary additive selected from the group consisting of a cyclic carbonate-based compound, a fluorine-substituted cyclic carbonate-based compounds, a sultone-based compound, a cyclic sulfate-based compound and a phosphate-based compound.

8. The electrolyte for a lithium secondary battery of claim 7, wherein the auxiliary additive is included in an amount greater than 0, and less than or equal to 10 wt% based on a total weight of the electrolyte.

9. The electrolyte for a lithium secondary battery of any one of claims 1 to 8, further comprising an organic solvent,
wherein the organic solvent comprises a linear carbonate and a cyclic carbonate.

10. The electrolyte for a lithium secondary battery of claim 9, wherein the linear carbonate comprises at least one selected from the group consisting of dimethyl carbonate (DMC), ethyl methyl carbonate (EMC), methyl propyl carbonate, ethyl propyl carbonate, diethyl carbonate (DEC) and dipropyl carbonate.

11. The electrolyte for a lithium secondary battery of claim 9 or 10, wherein the cyclic carbonate comprises at least one selected from the group consisting of propylene carbonate (PC), ethylene carbonate (EC) and butylene carbonate.

12. The electrolyte for a lithium secondary battery of any one of claims 9 to 11, wherein a volume ratio of the linear carbonate and the cyclic carbonate is 1:10 to 10:1.

13. A lithium secondary battery, comprising:
an electrode assembly comprising at least one cathode and at least one anode;
a case for housing the electrode assembly; and
the electrolyte for a lithium secondary battery of any one of claims 1 to 12 housed together with the electrode assembly in the case.
